# EUROPEAN PATENT SPECIFICATION

(11) **EP 0 353 307 B1**
(45) Date of publication and mention of the grant of the patent: **13.04.1994**
(21) Application number: 89901591.1
(22) Date of filing: 18.01.1989
(51) Int. Cl.: G05B 19/04

(54) **SYSTEM FOR CONTROLLING PC APPARATUS**
GERÄT ZUM STEUERN EINER SPEICHERPROGRAMMIERBAREN STEUERUNG
SYSTEME DE COMMANDE D'UN ORGANE DE COMMANDE PROGRAMMABLE

(30) Priority: 29.01.1988 JP 18604/88
(43) Date of publication of application: 07.02.1990
(73) Proprietor: FANUC LTD., Minamitsuru-gun, Yamanashi 401-05 (JP)
(72) Inventor: KIYA, Nobuyuki, Hachioji-shi Tokyo 193 (JP); ONISHI, Yasushi Fanuc Mansion Harimomi 8-304, Yamanashi 401-05 (JP)
(74) Representative: Brunner, Michael John
(86) International application number: JP8900042
(87) International publication number: WO8907289

(56) References cited:
- JP-A- 5 427 686
- JP-A- 5 968 005
- JP-A- 6 139 103
- JP-A-62 152 005
- JP-A-63 211 004
- PATENT ABSTRACTS OF JAPAN vol. 13, no. 1 (P-808)(3349) 06 January 1989,& JP-A-63 211004 (HITACHI LTD) 01 September 1988,

## Description

### Technical Field

The present invention relates to a system adapted to control a programmable control device (PC) executing a user program cyclically, and more specifically, to a system adapted to control a PC device permitting output signal conditions in a stop mode to be arbitrarily programmed by a user program.

### Background Art

The operating conditions of a PC device include an operation mode and a stop mode and usually, all output signals are compulsorily turned off in the stop mode.

Sometimes, however, an output signal must remain as same condition in the operation mode, depending on the character of the signal, when the PC device is in the stop mode. For example, a signal effecting a mechanical operation when in an "ON" state must be made "OFF" in the stop mode. On the other hand, preferably an output signal controlling a clamp machanism and the like is kept in the "ON" state in the stop mode.

In a known PC device control system, parameters are provided by which the whole of output signals or a part of thereof can be made "OFF", or kept in their previous state, in a stop mode.

In the system whereby the above conditions are set by using these parameters, however, an increase in the number of signals means that the number of parameters to be set must be increased, and it becomes difficult to set a parameter for each signal.

Further, to ensure a required operation of the PC device, the parameters must be correctly set, in addition to the creation of a program, by the user.

### Disclosure of the Invention

Taking the above into consideration, an object of the present invention is to provide a system adapted to control a PC device by which output signal conditions in a stop mode can be arbitrarily programmed by a user program.

Therefore, in accordance with the present invention, there is provided a system adapted to control a programmable control device (PC) executing a user program cyclically, comprising the steps of providing data bits in a memory space which can be accessed by the user program, making the data bits "ON" in an operation mode and " OFF" in a stop mode, programming the data bits with an AND condition for an output signal to be made "OFF" in the stop mode, and shifting the operation mode to the stop mode after having made the data bits "OFF" and having executed the user program for one or more scans.

The data bits provided in the memory space are programmed with the AND condition for the output signal to be made "OFF" in the stop mode, the data bits are first made "OFF" to make a corresponding output "OFF", and then the operation mode is shifted to the stop mode.

### Brief Description of the Drawings

Fig. 1 is a diagram of a user program using the present invention;
Fig. 2 is a timing chart of the operation of signals;
Fig. 3 is a flowchart of the process of a management program ; and
Fig. 4 is a block diagram of the hardware of a PC device as an embodiment of the present invention.

### Best Mode for Carrying Out the Invention

An embodiment of the present invention will be described in detail with reference to the drawings.

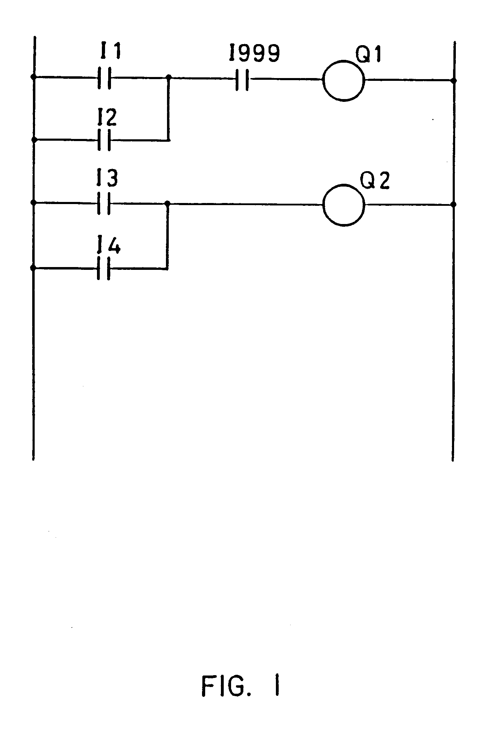

Fig. 1 is a ladder diagram of the embodiment of the present invention showing an example, wherein I1, I2, I3, and I4 designate input signals and Q1 and Q2 designate output signals. Here, the output signal Q1 must be made "OFF" when the PC device (programmable controller) shifts from an operation mode to a stop mode, and conversely, the output signal Q2 must be held in the previous state thereof at that time.

Designated at I999 is an output control signal which makes the output signal Q1 "OFF" when the PC device is shifted from the operation mode to the stop mode. The output control signal I999 is programmed with an AND conditon for the output signal Q1, and therefore when the operation mode is to be shifted to the stop mode, the control signal I999 is made "OFF" and a logical process for a scan is once executed and the output signal Q1 is then made "OFF" to shift the operation mode to the stop mode. This control is processed by a management program stored in a ROM of the PC device.

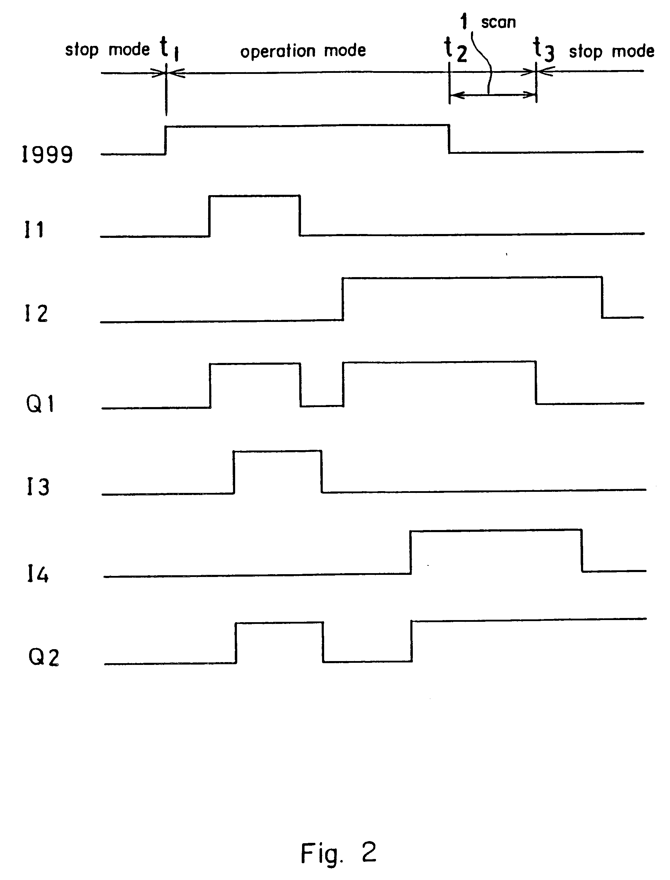

Next, the shift from the operation mode to the stop mode will be described with reference to the timing charts shown in Fig. 2, which are timing charts of the signals shown in Fig. 1.

The stop mode is terminated at a time t₁, at which an operator depresses a start button to shift to the operation mode. Then at a time t₂, the operator depresses a stop button, to cause the PC device to make the signal I999 "OFF", and execute a logic process for one or more scans, and to shift to the stop mode at a time t₃.

As shown in Fig. 2, since the output control signal I999 is programmed with the AND condition, the output signal Q1 is made " OFF" at the time t₃ when the logical process for the one scan has been executed. Conversely, the output Q2 is kept in the previous condition because the output control signal I999 is not programmed with the AND condition.

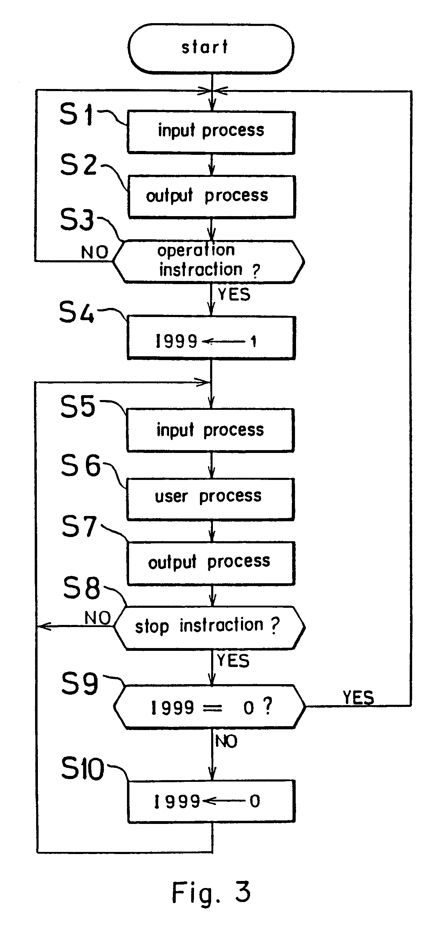

Fig. 3 is a flowchart of the process of a management program. In the figure, the number following "S" represents the step number.
[S1] an input process such as a reading of an input signal and the like is executed.
[S2] an output process is executed.
[S3] it is determined if an operation instruction exists. If an operation instruction does not exist, the flow returns to step S1, but if an operation instruction does exist, the flow goes to step S4.
[S4] it is an operation mode, therefore, the output control signal I999 is set to "1".
[S5] an input process such as a reading of an input signal and the like is executed.
[S6] a user program or a ladder program is executed.
[S7] a signal is output as a result of the execution of the ladder program.
[S8] it is determined whether a stop instruction exists. If a stop instruction does not exist, the flow goes to step S5 and the ladder program process is executed. If a stop instrucion does exist, the flow goes to step S9.
[S9] it is determined whether the output control signal I999 is "0". If this signal is "0", the flow goes to step S1, and if the signal is "1", the flow goes to step S10.
[S10] the output control signal I999 is set to "0", and the flow goes to step S5. When the signal I999 is set to "0", the user program for one scan is executed (S5, S6 ... S9), and the flow returns to step S1, to shift the operation mode to the stop mode.

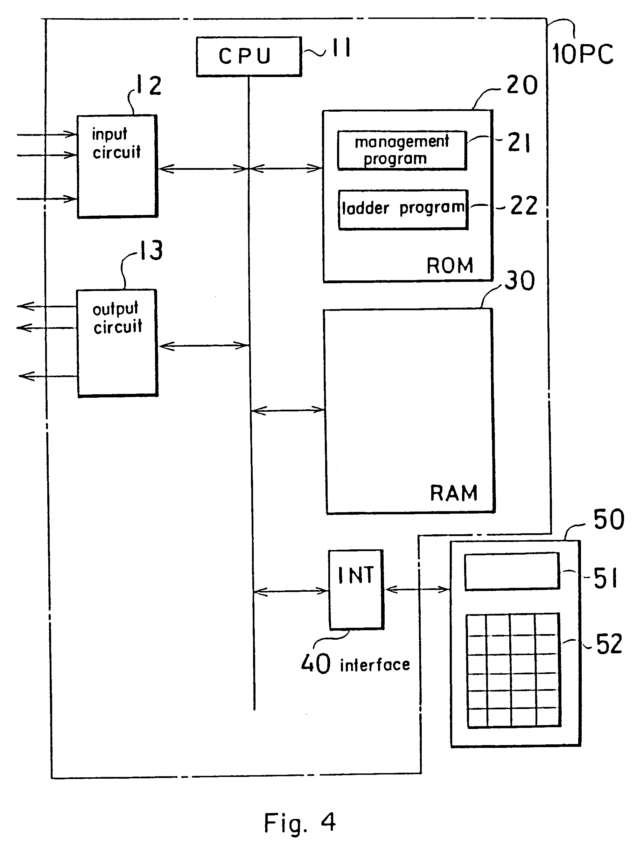

Fig. 4 is a block diagram of the hardware of a PC device as an embodiment of the present invention. As shown in Fig 4, a processor 11 exerts overall control of the PC device 10, an input circuit 12 receives external signals and transmit same to a bus after changing the level thereof, and output circuit 13 outputs internal signals to the outside.

The ROM 20 stores the manegement program 21, which manages the execution of a ladder program (control program), and the ladder program 22 for controlling a machine tool and the like, in addition to the input and output signals.

An interface circuit 40 connects a programming unit 50 to the bus which is used to program and debug the ladder program 22, and comprises a liquid crystal display 51 and a keyboard 52.

Although the above description is made with respect to a user program or a ladder program, a high level language such as a sequential function chart (SFC), PASCAL, and the like can be processed in the same manner.

According to the present invention, as described above, a data bit is provided and made "ON" in an operation mode and turned "OFF" when the operation mode is shifted to a stop mode. The operation mode is shifted to the stop mode after the user program for the one scan has been executed, and thus the output signal can be made "OFF" by programming the user program with the data bit with the AND condition. Accordingly, it is not necessary to set a parameter to change a mode for each signal and thus setting errors and the like are eliminated.

## Claims

1. A system adapted to control a programmable control device executing a user program cyclically, comprising the steps of:
providing a data bit in a memory space which can be accessed by said user program;
making the data bit "ON" in an operation mode and "OFF" in a stop mode;
programming said data bit with an AND condition for output signals to be made "OFF" in said stop mode; and
shifting the operation mode to the stop mode after having made the data bit "OFF" and having excuted said user program for one or more scans.

2. The system according to claim 1, wherein said user program is a ladder program.

3. The system according to claim 1, wherein said user program is a sequential functional chart.

4. The system according to claim 1, wherein said user program is a high level language such as PASCAL and the like.

## Patentansprüche

1. System, mit dem eine programmierbare Steuervorrichtung, die ein Benutzerprogramm zyklisch ausführt, gesteuert werden kann, mit den folgenden Schritten:
Vorsehen eines Datenbits in einem Speicherraum, auf den das Benutzerprogramm Zugriff hat;
Setzen des Datenbits auf "EIN" in einem Arbeitsbetrieb und auf "AUS" in einem Stopbetrieb;
Programmieren des Datenbits mit einer "UND"-Bedingung, um Ausgangssignale im Stopbetrieb auf "AUS" zu setzen; und
Verschieben des Arbeitsbetriebes auf Stopbetrieb, nachdem das Datenbit auf "AUS" gesetzt und das Benutzerprogramm für eine oder mehrere Abfragen ausgeführt worden ist.

2. System nach Anspruch 1, bei dem das Benutzerprogramm ein Leiterprogramm ist.

3. System nach Anspruch 1, bei dem das Benutzerprogramm ein sequentielles Funktionsdiagramm ist.

4. System nach Anspruch 1, bei dem das Benutzerprogramm eine Sprache hoher Ordnung, wie PASCAL u.ä., ist.

## Revendications

1. Un système adapté pour commander un dispositif de commande programmable exécutant de manière cyclique un programme d'utilisateur, comprenant les opérations consistant à :
fournir un bit de données dans un espace mémoire qui peut être accessible par ledit programme d'utilisateur ;
mettre le bit de données sur "MARCHE" dans un mode de fonctionnement et sur "ARRET" dans un mode d'arrêt ;
programmer ledit bit de données avec une condition ET pour des signaux de sortie devant être mis sur "ARRET" dans ledit mode d'arrêt ; et
décaler le mode de fonctionnement vers le mode d'arrêt après avoir mis le bit de données sur "ARRET" et avoir exécuté ledit programme d'utilisateur pour un ou plusieurs balayages.

2. Le système selon la revendication 1, dans lequel ledit programme d'utilisateur est un programme d'échelle.

3. Le système selon la revendication 1, dans lequel ledit programme d'utilisateur est un synoptique fonctionnel séquentiel.

4. Le système selon la revendication 1, dans lequel ledit programme d'utilisateur est un langage évolué tel que le PASCAL et analogues.
